# EUROPÄISCHE PATENTSCHRIFT

(11) **EP 0 900 613 B1**
(45) Veröffentlichungstag und Bekanntmachung des Hinweises auf die Patenterteilung: **22.12.2004**
(21) Anmeldenummer: 98122078.3
(22) Anmeldetag: 23.06.1995
(51) Int. Cl.: B23B 31/12

(54) **Bohrfutter**
Drilling chuck
Mandrin de perçage

(30) Priorität: 25.02.1995 DE 19506708
(43) Veröffentlichungstag der Anmeldung: 10.03.1999
(62) Teilanmeldung aus: 95109792.2
(73) Patentinhaber: Röhm, Günter Horst, D-89567 Sontheim (DE)
(72) Erfinder: Röhm, Günther Horst, 89567 Sontheim (DE); Mack, Hans-Dieter, 89567 Sontheim (DE)
(74) Vertreter: Hentrich, Swen Dipl.-Phys. Dr.

(56) Entgegenhaltungen:
- EP-A- 0 561 247
- DE-C- 3 437 792
- DE-C- 4 023 303
- FR-A- 1 602 481

## Beschreibung

Die Erfindung betrifft ein Bohrfutter mit einem Futterkörper, mit zwischen sich ein Bohrwerkzeug aufnehmenden Spannbacken, die Backenschäfte aufweisen, welche zur Anpassung der Spannbackenstellung an den Einspanndurchmesser des Bohrwerkzeugs und zum Spannen und Lösen des Bohrfutters in Führungsaufnahmen des Futterkörpers verstellbar sind, und mit einem mit dem Futterkörper koaxialen und zum Verstellen der Spannbacken relativ zum Futterkörper verdrehbaren Spannring, sowie mit einer Zapfenaufnahme zur koaxialen und drehschlüssigen Verbindung des Futterkörpers mit einem Verbindungszapfen der in einem Spindelgehäuse, insbesondere einer Handbohrmaschine, drehbar und antreibbar gelagerten Bohrspindel.

Bohrfutter dieser Art sind in verschiedenen Ausführungsformen im Zusammenwirken mit Bohrmaschinen als Teil einer Bohrvorrichtung bekannt. So sind insbesondere Bohrfutter mit den vorstehend aufgeführten Merkmalen, im übrigen aber von unterschiedlichem Aufbau und unterschiedlicher Funktionsweise z. B. in DE 42 38 465 C, DE 34 37 792 C1 oder DE 37 27 147 A1 beschrieben. Die EP 0 561 247 A1 zeigt gleichfalls ein Bohrfutter der eingangs genannten Art, bei dem die Spannbacken im geöffneten Zustand des Bohrfutters sich mit ihren axial hinteren Enden bis zum Ende des Futterkörpers erstrecken ohne aus diesen in Richtung Bohrmaschine oder Bohrspindel auszutreten. Allen diesen bekannten Bohrvorrichtungen ist gemeinsam, daß die Bohrmaschine und das Bohrfutter in ihrer gegenseitigen Zuordnung nur insoweit einander angepaßt sind, daß das Bohrfutter auf die Bohrspindel paßt und die Bohrspindel diejenigen Dreh- und Schlagfunktionen auszuüben vermag, welche im Bohrbetrieb für das jeweilige Bohrfutter benötigt werden. Im übrigen aber ist das Bohrfutter ein in sich abgeschlossenes, von der Bohrmaschine unabhängiges selbständiges Teil, das mindestens eine axiale Länge besitzt, die nicht nur die Länge der Backenschäfte mit den Spannbacken, sondern auch die Hublänge einschließt, um welche sich die Backenschäfte in ihren Führungsaufnahmen maximal verschieben, wenn die Spannbacken zwischen dem kleinsten und dem größtmöglichen Einspanndurchmesser verstellt werden. Auf der Seite der Bohrmaschine bedingt in der Regel das im Spindelgehäuse bohrfutterseitig am Austritt der Bohrspindel befindliche Spindellager ebenfalls eine gewisse axiale Baulänge, die sich zu der des Bohrfutters addiert, betrachtet man die Bohrvorrichtung insgesamt, in der das Bohrfutter und das Spindellager längs der Bohrspindel axial hintereinander gereiht sind.

Der Erfindung liegt die Aufgabe zugrunde, ein Bohrfutter der eingangs genannten Art so auszubilden, daß die Bohrmaschine mit ihrer Bohrspindel einerseits und das Bohrfutter andererseits zu einer integrierten Bauform von axial möglichst kurzer Baulänge vereinigt sind.

Diese Aufgabe wird bei einem Bohrfutter mit den eingangs aufgeführten Merkmalen erfindungsgemäß dadurch gelöst, daß in der dem geöffneten Bohrfutter entsprechenden Grenzstellung der Spannbacken die Backenschäfte zur Überlappung sich seitlich neben der Zapfenaufnahme mit dem darin einsetzbaren Verbindungszapfen der Bohrspindel sowie seitlich neben dem an den Verbindungszapfen angrenzenden Teil der Bohrspindel befinden.

Das Spindelgehäuse und das Bohrfutter bilden in optimal aufeinander abgestimmter Weise eine integrierte Bauform, deren axiale Baulänge im Vergleich zu den bekannten Bohrvorrichtungen kürzer ist. Die Erfindung ermöglicht im Ergebnis eine sehr vorteilhafte, kompakte und kurze Bauweise der Bohrvorrichtung insgesamt und insbesondere des Bohrfutters, was dem Maschinenhersteller erlaubt, aufgrund des Raumgewinns und des geringeren Gewichtes die Maschinenkonstruktion zu überarbeiten und zu vereinfachen, ferner die Betriebsmöglichkeiten sowie die Bedienung und die Handhabung der Bohrvorrichtung insgesamt zu verbessern. Günstig dabei ist, wenn die Zapfenaufnahme zur Lagerung der Bohrspindel im Futterkörper axial sehr nahe, nämlich unmittelbar benachbart, bei der den vom Bohrfutter gehaltenen Werkzeugschaft aufnehmenden Ausnehmung angeordnet ist. Durch die Lagerung der Bohrspindel axial sehr nahe an dem im Bohrfutter gehaltenen Werkzeugschaft werden eine höhere Rundlaufgenauigkeit und weniger Vibrationen erreicht. Die Kurzbauweise des Bohrfutters verringert die Gestehungskosten der Bohrvorrichtung, deren Gewicht und deren Gesamtbaulänge.

Zweckmäßigerweise sind der Verbindungszapfen und die Zapfenaufnahme ineinander geschraubt. Diese Gewindeverbindung ist nahezu weltweit standardisiert und normiert, wozu beispielhaft auf die DIN 6349 verwiesen werden kann. Die Gewindeverbindung bietet den Vorteil einer ausreichenden Festigkeit auch bei einer nur kurzen Länge von Zapfenaufnahme und Verbindungszapfen, also mit nur wenigen Gewindegängen.

Vorteilhaft ist weiterhin, wenn die Zapfenaufnahme in axialer Richtung auf Höhe des Eingriffs des Spannrings in die Verzahnung der Backenschäfte im Futterkörper angeordnet ist, bzw wenn der Eingriff des Spannrings in die Verzahnung der Backenschäfte axial hinter der Zapfenaufnahme auf der dem Spindelgehäuse zugewandten Seite des Futterkörpers oder axial hinter dem dem Spindelgehäuse zugewandten Ende des Futterkörpers liegt.

Günstig ist gleichfalls, wenn der Spannring einen Kragen aufweist, an dessen Innenumfangsfläche eine Ringnut ausgebildet ist, in die zur axialen Sicherung des Spannrings ein am Futterkörper ausgebildeter Ringbund eingreift.

Vorgesehen ist auch, daß die Backenschäfte beim Verstellen der Spannbacken zu größeren Einspanndurchmessern rückwärts aus den Führungsaufnahmen austreten und axial über das dem Spindelgehäuse zugewandte Ende des Futterkörpers überstehen.

Hinsichtlich einer kurzen Baulänge des Futterkörpers günstiger ist es, wenn die Backenschäfte beim Verstellen der Spannbacken zu größeren Einspanndurchmessern am Ende des Gewindeeingriffs des Spannrings in die Verzahnung der Backenschäfte aus dem Futterkörper austreten.

Aus Gründen der Formgebung und der Sicherheit empfiehlt es sich, daß die aus dem Futterkörper austretenden Backenschäfte in einem zwischen dem Futterkörper und dem Spindelgehäuse ausgebildeten Ringraum ragen, der nach außen hin abgeschlossen ist. Das Bohrfutter ist auf der Gewindespindel axial so dicht am Spindelgehäuse angeordnet, daß die austretenden Enden der Backenschäfte in dem im Spindelgehäuse ausgebildeten, axial zum Bohrfutter hin offenen Ringraum vorstehen, in dem die Backenschäfte bei sich drehenden Bohrfutter umlaufen. Eine dafür bevorzugte Ausführungsform ist dadurch gekennzeichnet, daß das Spindelgehäuse den Ringraum an dessen von der Bohrspindel aus gesehen auswärts liegenden Seite übergreift und mit einem im Querschnitt kreisförmigen Gehäuserand bis an das Bohrfutter vorsteht, wobei der Gehäuserand mit dem Bohrfutter zweckmäßigerweise eine axiale Überlappung bildet. Die Überlappung ist vorzugsweise zwischen dem Gehäuserand und dem Spannring des Bohrfutters ausgebildet. Die Integration von Spindelgehäuse und Bohrfutter bietet weiter die vorteilhafte Möglichkeit, daß der Futterkörper axial in das Spindelgehäuse vorsteht und im Spindelgehäuse einen Zahnkranz aufweist, der mit einem zum Bohrspindelantrieb gehörenden Antriebszahnrad im Eingriff steht, so daß im Ergebnis der Drehantrieb direkt, d. h. ohne Vermittlung durch die Bohrspindel, auf den Futterkörper wirkt. Ähnlich wie der Drehantrieb kann auch der Schlagantrieb ohne Zwischenschaltung der Bohrspindel unmittelbar auf den Futterkörper wirksam werden. Eine dafür besonders geeignete Anordnung ist dadurch gekennzeichnet, daß unmittelbar zwischen dem rückwärtigen Ende des Futterkörpers einerseits und dem Spindellager oder einem zwischen der Bohrspindel und dem Ringraum befindlichen Hals des Spindelgehäuses andererseits ein die Schlagfunktion auf das Bohrfutter bei dessen Umlauf erzeugender Profilkranz vorgesehen ist.

Vom Ringraum können nach außen führende Reinigungsöffnungen vorgesehen sein. Die im Ringraum umlaufenden Backenschäfte versetzen die Luft im Ringraum in Rotation, was eine entsprechende Mitnahme vom in den Ringraum gelangtem Bohrschmutz ergibt, der somit durch die Reinigungsöffnungen nach außen abgeschleudert werden kann. Es besteht aber auch die Möglichkeit, solchen Schmutz aus dem Ringraum auszublasen oder abzusaugen, was am einfachsten dadurch zu erreichen ist, daß im Ringraum ein im Spindelgehäuse vorgesehener Druck- oder Saugluftkanal mündet, der an ein Druck- oder Saugluftgebläse angeschlossen oder anschließbar ist, wobei das Sauggebläse problemlos innerhalb des Spindel- bzw. Bohrmaschinengehäuses ausgebildet sein kann. Der sich bei dieser Anordnung im Ringraum aufbauende Über- oder Unterdruck übt außerdem eine sehr erwünschte Reinigungswirkung im übrigen Bohrfutter aus, insbesondere in den Führungsaufnahmen für die Spannbacken.

Für die Verbindung des Bohrfutters mit der Bohrspindel bestehen im Rahmen der Erfindung vielfältige Möglichkeiten, insbesondere in Abhängigkeit von der Art des beabsichtigten Bohrbetriebs, wie Schlag- oder Hammerbohren, wobei für den Fall des Hammerbohrens in der hohlen Bohrspindel auch ein Döpper vorgesehen sein kann, der unmittelbar das im Bohrfutter gehaltene Ende des Werkzeugschafts beaufschlagt, wie es vielfach bekannt ist und daher hier keiner weiteren Beschreibung bedarf.

Im einzelnen können der Verbindungszapfen und die Zapfenaufnahme einen unrunden, insbesondere mehrkantigen Querschnitt besitzen und durch eine in Umfangsrichtung verlaufende Nut- und Federverbindung axial aneinander gesichert sein. Anstelle dieser Nut- und Federverbindung kann der Verbindungszapfen auch in einer Ringnut einen am Futterkörper zum Anschlag kommenden Sicherungsring tragen. Auch besteht die Möglichkeit, anstelle der Nut- und Federverbindung in der Wand der Zapfenaufnahme eine Ringnut auszubilden, in die Werkstoff aus dem Verbindungszapfen durch entsprechende Werkstoffverformung eingesickt ist, wobei diese Werkstoffverformung nur einen einfachen Arbeitsgang bei der Montage des Bohrfutters auf der Bohrspindel erfordert. Eine weitere vorteilhafte Verbindungsmöglichkeit ist dadurch gekennzeichnet, daß der Verbindungszapfen und die Zapfenaufnahme durch eine axial verlaufende Nut- und Federverbindung gegen Relativverdrehungen und mit einem am Futterkörper zum Anschlag kommenden, in einer Ringnut des Verbindungszapfens sitzenden Anschlagring gegen axiale Relativverstellungen gesichert sind. Auch können, wie vorstehend schon erwähnt, der Verbindungszapfen und die Zapfenaufnahme ineinander geschraubt und der Verbindungszapfen mit stirnseitig offenen Radial- oder Axialnuten versehen sein, in die Werkstoff aus der Wand der Zapfenaufnahme wiederum durch entsprechende Werkstoffverformung eingesickt ist, wobei die Einsickung dazu dient, bei Linkslauf der Bohrspindel ein Lockern der Gewindeverbindung zu verhindern.

Die Stirn des in die Werkzeugaufnahme hineinragenden Verbindungszapfens kann im übrigen zur unmittelbaren Anlage des Endes des im Bohrfutter gehaltenen Werkzeugschaftes dienen, was sich aus Verschleißgründen vor allem dann empfiehlt, wenn zwar die Bohrspindel mit ihrem Gewindezapfen, nicht aber auch der Futterkörper gehärtet ist. Auch wird dadurch die Schlagübertragung von der Bohrspindel auf den Werkzeugschaft wirksamer. Der Verbindungszapfen kann insbesondere axial begrenzt verschiebbar in der Zapfenaufnahme gehalten sein, was vor allem im Hammerbohrbetrieb gewünscht sein kann, damit die auf das Schaftende des Werkzeugs einwirkenden Schläge nicht unnötig durch das Bohrfutter gedämpft werden. Im übrigen besteht auch die Möglichkeit, daß der Verbindungszapfen an seinem in die Ausnehmung für den Werkzeugschaft vorstehenden Ende Einrichtungen zur Führung und/oder Drehmitnahme des Werkzeugschaftendes aufweist, was dann vorteilhaft ist, wenn es sich bei dem Werkzeug etwa um einen Gewindebohrer oder ein Werkzeug-, insbesondere Schrauberbit, handelt.

Im folgenden wird die Erfindung an in der Zeichnung dargestellten Ausführungsbeispielen näher erläutert; es zeigen:
- Fig. 1: eine Bohrvorrichtung nach der Erfindung mit nur teilweise dargestelltem Spindel- und Bohrmaschinengehäuse in einem Längsschnitt durch die Achse der Bohrspindel,
- Fig. 2: den Gegenstand der Fig. 1 in einer anderen Ausführungsform,
- Fig. 3: eine nochmals andere Ausführungsform der Bohrvorrichtung, ebenfalls im Axialschnitt,
- Fig. 4: den Gegenstand der Fig. 3 in einer abgeänderten Ausführungsform,
- Fig. 5: den Gegenstand der Fig. 1 bis 3 in einer nochmals anderen Ausführungsform,
- Fig. 6: in den Teilfig. 6 a) bis 6 f) die Vorrichtung nach den Fig. 4 und 5 in jeweils einer Teildarstellung in verschiedenen Ausführungsformen,
- Fig. 7: den Schnitt VII - VII in Fig. 5,
- Fig. 8: eine Bohrvorrichtung nach der Erfindung mit einer Einrichtung zum Sperren des Futterkörpers gegen Verdrehen, im Axialschnitt,
- Fig. 9: den Schnitt IX - IX in Fig. 8,
- Fig. 10: den Gegenstand der Fig. 8 in einer weiteren Ausführungsform,
- Fig. 11: den Schnitt XI - XI in Fig. 10,
- Fig. 12: eine nochmals andere Ausführungsform der Bohrvorrichtung entsprechend den Fig. 8 und 10,
- Fig. 13: den Schnitt XIII - XIII in Fig. 12,
- Fig. 14: den Schnitt XIV - XIV in Fig. 12,
- Fig. 15: eine weitere Ausführungsform der Bohrvorrichtung mit einer Sperreinrichtung für den Futterkörper, ebenfalls im Axialschnitt,
- Fig. 16: den Schnitt XVI - XVI in Fig. 15,
- Fig. 17: den Schnitt XVII - XVII in Fig. 15,
- Fig. 18: eine nochmals andere Ausführungsform der Bohrvorrichtung mit Sperreinrichtung,
- Fig. 19: den Schnitt XIX - XIX in Fig. 18 in zwei verschiedenen Betriebszuständen der Sperreinrichtung,
- Fig. 20: den Schnitt XX - XX in Fig. 18,
- Fig. 21: den Schnitt XXI - XXI in Fig. 18,
- Fig. 22: einen Axialschnitt durch eine Bohrvorrichtung nach der Erfindung mit einer in die Drehmomentübertragung der Bohrspindel eingeschalteten Drehmomentkupplung, und
- Fig. 23: einen Axialschnitt durch eine nochmals andere Ausführungsform der Bohrvorrichtung nach der Erfindung.

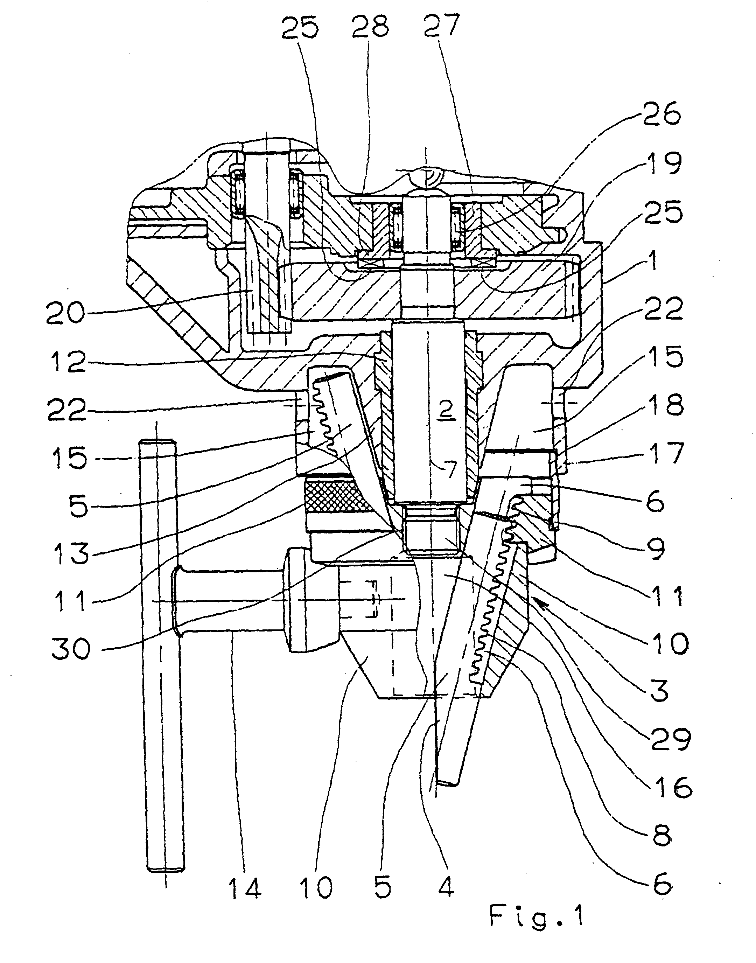

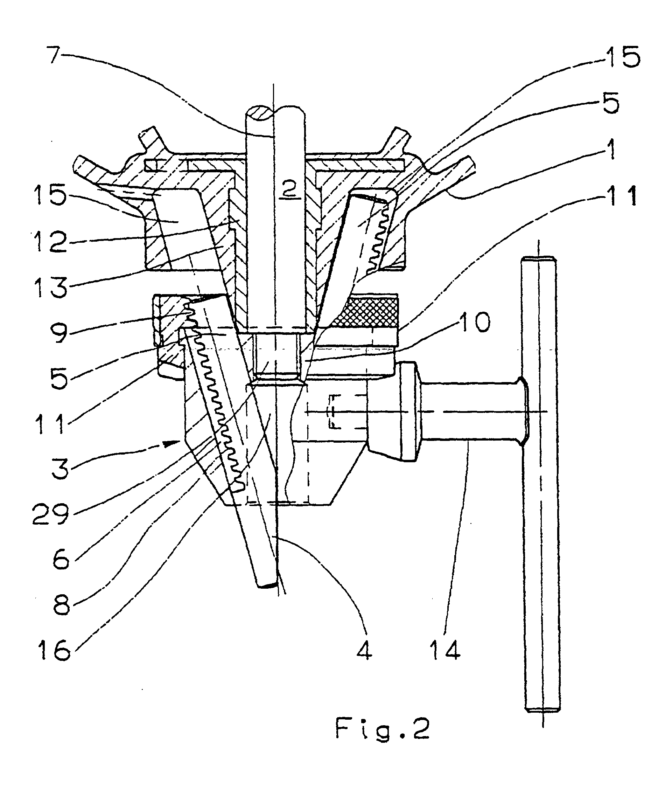

Die in der Zeichnung dargestellten Bohrvorrichtungen umfassen eine nur mit ihrem vorderen Teil gezeichnete Bohrmaschine, in deren Spindelgehäuse 1 eine in üblicher, im einzelnen nicht dargestellter Weise durch einen Motor antreibbare Bohrspindel 2 drehbar gelagert ist. An der aus dem Spindelgehäuse 1 vorstehenden Bohrspindel 2 ist der Futterkörper 10 eines Bohrfutters 3 angeschlossen, das mit drei Spannbacken 4 zur Aufnahme eines in der Zeichnung ebenfalls nicht dargestellten Bohrwerkzeugs ausgebildet ist. Die Spannbacken 4 sind an Backenschäften 5 ausgebildet, welche zur Anpassung der Spannbackenstellung an den Einspanndurchmesser des Bohrwerkzeugs und zum Spannen und Lösen des Bohrfutters 3 in Führungsaufnahmen 6 des Bohrfutters verstellbar sind, wobei diese Führungsaufnahmen 6 geneigt zur Bohrspindel- bzw. Bohrfutterachse 7 verlaufen. Die Backenschäfte 5 stehen über eine Verzahnung 8 mit dem Innengewinde 9 eines am Futterkörper 10 koaxial zur Futterachse 7 drehbar und unverschiebbar geführten Spannrings 11 in Verbindung, der in den Fig. 1 und 2 durch einen Futterschlüssel 14, in allen anderen Ausführungen schlüssellos betätigt werden kann. Durch Verdrehen des Spannrings 11 in der einen oder anderen Drehrichtung werden die Backenschäfte 5 und mit ihnen die Spannbacken 4 im Futterkörper 10 vor- oder zurückgestellt, wobei im ersteren Fall das Bohrfutter 3 geschlossen und gespannt, im letzteren Fall das Bohrfutter 3 gelöst und geöffnet wird. Die dabei möglichen Grenzstellungen der Spannbacken 4 und Backenschäfte 5 sind in den Axialschnitten der Zeichnung jeweils in der linken bzw. rechten Figurenhälfte dargestellt. Zur Lagerung der Bohrspindel 2 im Spindelgehäuse 1 dient u. a. ein Spindellager 12, das bohrfutterseitig am Austritt der Bohrspindel 2 aus dem Spindelgehäuse 1 angeordnet, nämlich in den Ausführungsbeispielen in einem Hals 13 des Spindelgehäuses 1 gehalten ist. - Die Erfindung ist allerdings nicht auf diese in der Zeichnung allein dargestellte spezielle Bauform des Bohrfutters 3 beschränkt. Im Rahmen der Erfindung können die Backenschäfte 5 auch parallel zur Futterachse 7 verlaufen, wie dies in DE 34 37 792 C1 beschrieben ist. Auch müssen die Backenschäfte 5 nicht notwendig im mit der Bohrspindel 2 verbundenen Futterkörper 10 geführt sein. Die Führungsaufnahmen 6 und die Backenschäfte 5 können auch im Spannring 11 angeordnet sein, wobei dann die Verzahnung 8 der Backenschäfte 5 mit einem entsprechend der Neigung der Führungsaufnahmen 6 konischen Außengewinde am Futterkörper 10 im Eingriff steht, wie dies beispielsweise aus der DE 37 37 147 A1 ersichtlich ist.

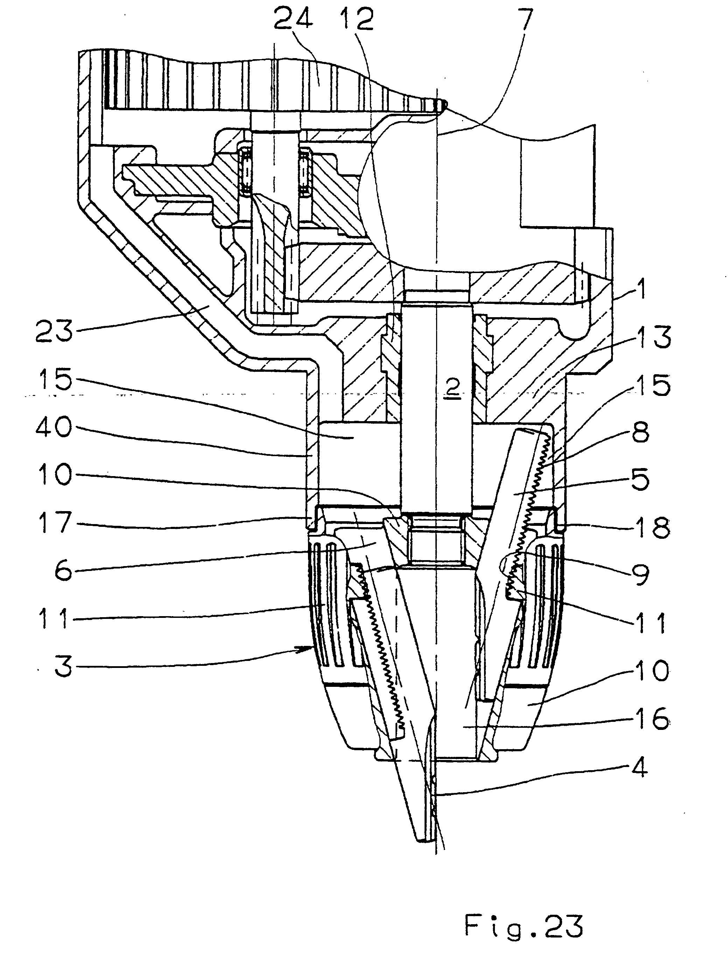

Wie im einzelnen die Futterkonstruktion auch gewählt sein mag, entsprechend der Erfindung ist das Bohrfutter 3 axial soweit verkürzt, daß die Backenschäfte 5 beim Verstellen der Spannbacken 4 zu größeren Einspanndurchmessern rückwärts aus den Führungsaufnahmen 6 austreten. Weiter ist das Bohrfutter 3 auf der Bohrspindel 2 axial so dicht am Spindelgehäuse 1 angeordnet, daß die rückwärts aus den Führungsaufnahmen 6 austretenden Enden der Backenschäfte 5 im Spindelgehäuse 1 mit ihrem aus den Führungsaufnahmen 6 ausgetretenen Teil in einen mit der Spindelachse 7 koaxialen, axial zum Bohrfutter 3 hin offenen Ringraum 15 vorstehen, in dem die Backenschäfte 5 bei rotierendem Bohrfutter 3 umlaufen. Dabei ist außer im Fall der Fig. 23 die Anordnung weiter so getroffen, daß das Spindellager 12 vom Ringraum 15 umgeben ist und sich daher zwischen den in den Ringraum 15 austretenden Enden der Backenschäfte 5 befindet. In jedem Fall ergibt sich eine sehr kurze axiale Bauweise der Bohrvorrichtung insgesamt, die zur Folge hat, daß die Bohrspindel 2 im Spindellager 12 axial sehr dicht an der Werkzeugausnehmung 16 im Bohrfutter 3 gelagert ist, was guten Rundlauf des Werkzeugs und Vibrationsfreiheit ergibt. Dabei kann die Anordnung sogar wie in Fig. 2 so getroffen werden, daß der Anschluß des Futterkörpers 10 an die Bohrspindel 2 axial noch werkzeugseitig vor dem Innengewinde 9 des Spannrings 11 und das Innengewinde 9 axial auf der Höhe des Spindellagers 12 liegt.

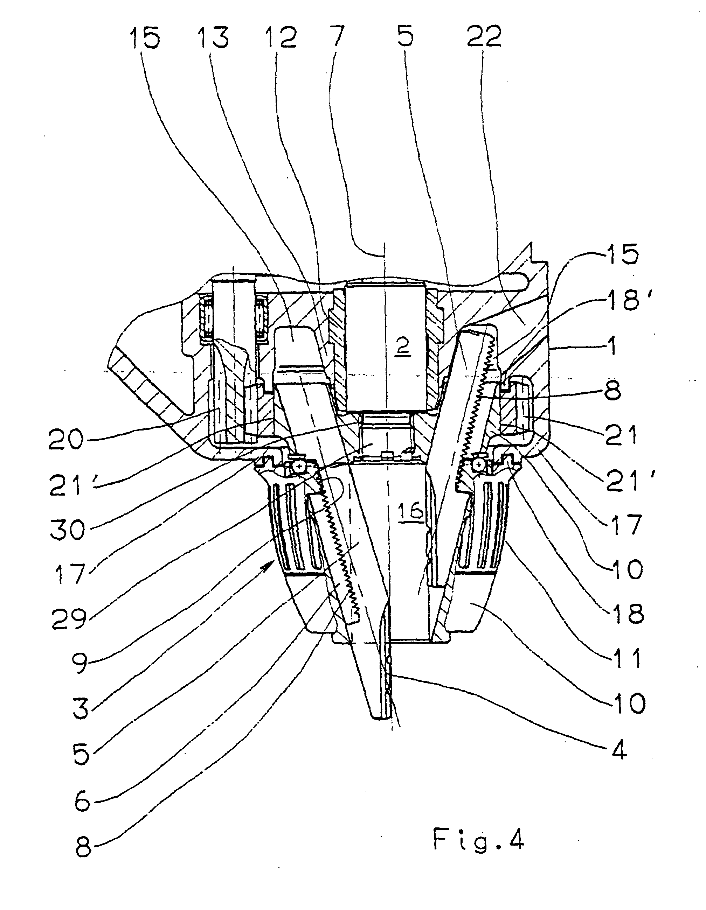

Der Ringraum 15 zwischen dem Bohrfutter 3 und dem Spindelgehäuse 1 ist in der Regel nach außen hin teilweise, wie in Fig. 2, oder vollständig, wie in allen anderen Ausführungsbeispielen, abgeschlossen. Das erfolgt in den meisten Fällen in der Weise, daß das Spindelgehäuse 1 den Ringraum 15 an dessen von der Bohrspindel 2 aus gesehen auswärts liegenden. Seite übergreift und mit einem im Querschnitt kreisförmigen Gehäuserand 17 bis an das Bohrfutter 3 vorsteht, wobei der Gehäuserand 17 mit dem Bohrfutter 3 eine axiale Überlappung 18 bildet, die in der Regel zwischen dem Gehäuserand 17 und dem Spannring 11 des Bohrfutters 3 ausgebildet ist, zusätzlich aber auch zwischen dem Spindelgehäuse 1 und dem Futterkörper 10 vorgesehen sein kann, wie dies in Fig. 4 bei 18' dargestellt ist. Im einzelnen kann diese Überlappung 18 durch den Eingriff eines Ringstegs in einen Ringfalz oder eine Ringnut erfolgen, wobei je nach Zweckmäßigkeit der Ringsteg spindelgehäuseseitig und der Ringfalz bzw. die Ringnut bohrfutterseitig oder umgekehrt ausgebildet sein können.

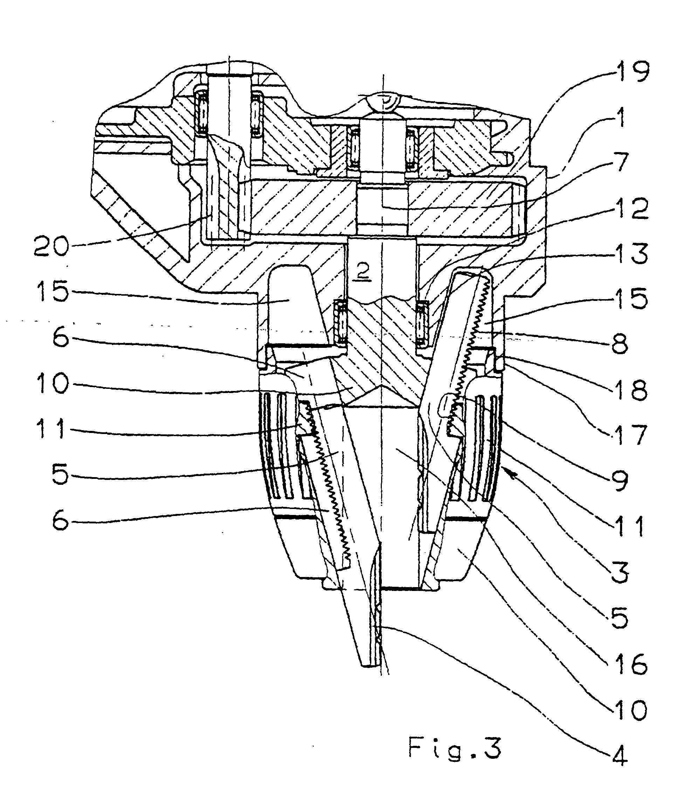

Der Antrieb des Bohrfutters 3 kann, wie üblich, über die Bohrspindel 2 erfolgen, die zu diesem Zweck über ein Zahnrad 19 mit einem vom nicht dargestellten Motor angetriebenen Antriebszahnrad 20 im Eingriff stehen kann, wie es beispielsweise die Fig. 1 oder 3 zeigen. Es besteht aber auch die in Fig. 4 dargestellte Möglichkeit, daß der Futterkörper 10 axial in das Spindelgehäuse 1 vorsteht und dort im Spindelgehäuse einen Zahnkranz 21 aufweist, der mit dem zum Drehantrieb gehörenden Antriebszahnrad 21 im Eingriff steht. Der Zahnkranz 21 kann unmittelbar einstückig am Futterkörper 10 ausgebildet, aber auch als selbständiges Teil auf den Futterkörper bei 21' aufgeschrumpft oder aufgepreßt sein. Die in Fig. 4 gezeigte Möglichkeit besitzt den Vorteil, daß der Drehantrieb ohne Vermittlung durch die Bohrspindel 2 unmittelbar auf den Futterkörper 10 wirkt.

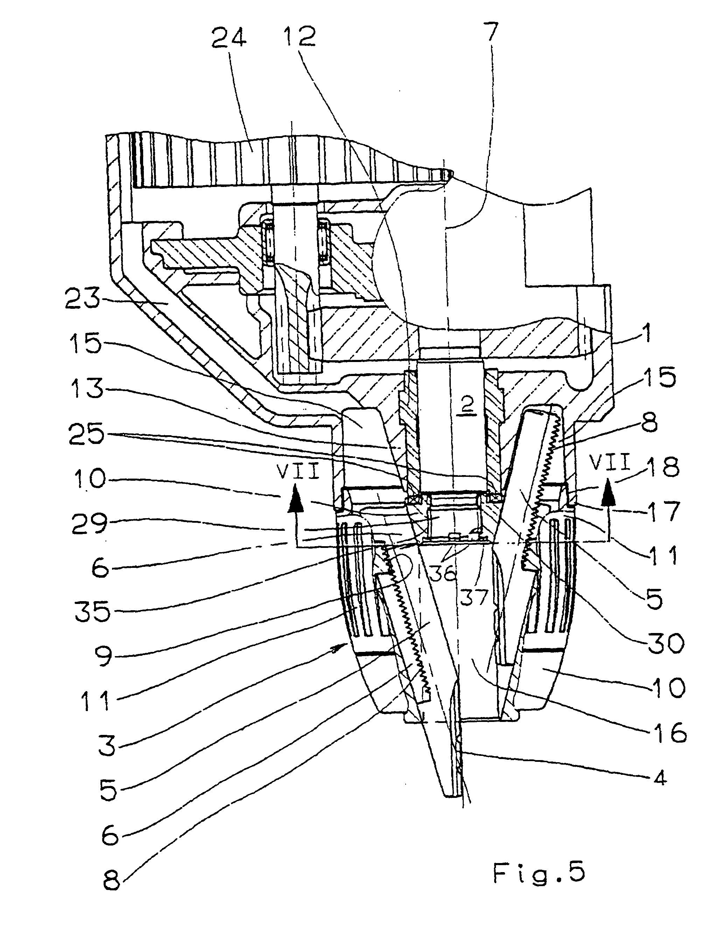

Die Fig. 1 und 4 zeigen Ausführungsformen, bei welchen vom Ringraum 15 nach außen führende Reinigungsöffnungen 22 vorgesehen sind, durch die in den Ringraum 15 gelangter Bohrschmutz nach außen austreten kann. Stattdessen besteht aber auch die aus Fig. 5 oder 23 ersichtliche Möglichkeit, daß im Ringraum 15 ein im Spindelgehäuse 1 vorgesehener Druck- oder Saugluftkanal 23 mündet, der an ein Druck- oder Saugluftgebläse im Bohrmaschinengehäuse angeschlossen ist, wozu ein vom Bohrmaschinenmotor angetriebenes Lüfterrad 24 in der Bohrmaschine dient. Der sich bei laufender Maschine somit im Ringraum 15 je nach Ausbildung des Lüfterrads 24 aufbauende Über- oder Unterdruck hat, da die Überlappung 18 zwischen dem Spindelgehäuse 1 und dem Bohrfutter 3 genügend dicht schließt, eine entsprechende Druck- bzw. Saugwirkung auf die mit dem Ringraum 15 kommunizierenden Führungsaufnahmen 6 im Futterkörper 10 zur Folge, so daß sich die Reinigungswirkung bis in das Bohrfutter 3, nämlich in dessen Führungsaufnahmen 6 und dessen den Werkzeugschaft aufnehmende Ausnehmung 16, in welche die Spannbacken 4 je nach Einspanndurchmesser verschieden weit hineinragen, fortsetzt.

Die Schlagfunktion kann, wie üblicherweise der Fall, durch einen zur Spindelachse 7 konzentrischen Profilkranz 25 auf die Bohrspindel 2 ausgeübt werden, wozu die Bohrspindel 2 in beispielsweise Fig. 1 am rückwärtigen Ende in einem Nadellager 26 geführt ist, das in einer Lagerhülse 27 angeordnet ist, zwischen deren spannfutterseitigem Flansch 28 und dem Zahnrad sich der Profilkranz 25 befindet. Es besteht aber auch stattdessen die in Fig. 5 gezeigte Möglichkeit, daß der Profilkranz 25 unmittelbar zwischen dem rückwärtigen Ende des Futterkörpers 10 einerseits und dem spannfutterseitigen Spindellager 12 vorgesehen ist. Die Schlagwirkung erfolgt dann unmittelbar auf den Futterkörper 12 unter entsprechender Entlastung der Bohrspindel 2.

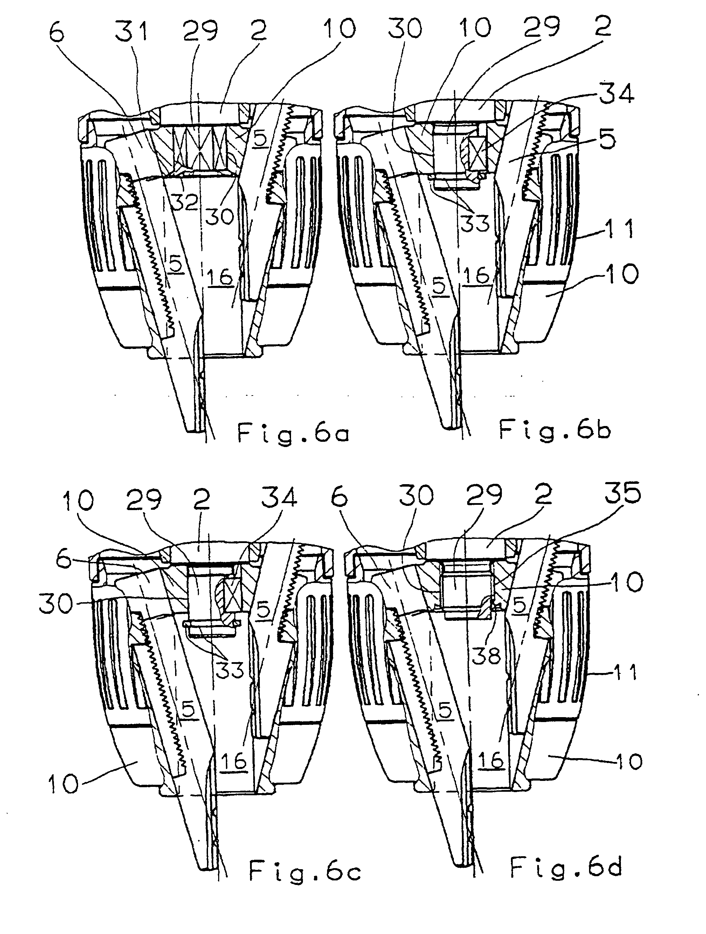

Im Ausführungsbeispiel nach Fig. 3 sind die Bohrspindel 2 und der Futterkörper 10 einstückig miteinander ausgeführt. Das spannfutterseitige Spindellager 12 ist als Nadellager ausgebildet, während in allen anderen Ausführungsbeispielen dieses Spindellager 12 als Gleitlager mit einer im Spindelgehäuse 1 gehaltenen Gleitbuchse ausgebildet ist. Bohrspindel 2 und Futterkörper 10 können selbstverständlich, wie in allen anderen Ausführungsformen gezeigt, auch getrennt voneinander hergestellt sein. Zu ihrer Verbindung besitzt die Bohrspindel 2 stirnseitig einen axialen Verbindungszapfen 29 und der Futterkörper 10 eine Zapfenaufnahme 30, in die der Verbindungszapfen 20 drehschlüssig eingreift. Entsprechend Fig. 6a besitzen der Verbindungszapfen 29 und die Zapfenaufnahme 30 einen im allgemeinen unrunden, insbesondere mehrkantigen, in Fig. 6a sechseckigen Querschnitt. Zur axialen Sicherung des Bohrfutters 3 an der Bohrspindel 2 ist inder Wand der Zapfenaufnahme 30 eine Ringnut 31 ausgebildet, in die Werkstoff 32 aus dem Verbindungszapfen 29 durch Werkstoffverformung eingesickt ist. Die axiale Sicherung kann aber auch durch eine in Umfangsrichtung verlaufende Nut- und Federverbindung 33 gemäß Fig. 6b, 6c erfolgen, wobei die Feder am Verbindungszapfen 29 einen am Futterkörper 10 zum Anschlag kommender Sicherungsring sein kann, wie dies die Fig. 6a und 6b zeigen. Die Fig. 6b, 6c zeigen außerdem eine Ausführungsform, bei der der Verbindungszapfen 29 und die Zapfenaufnahme 30 durch eine axial verlaufende Nut- und Federverbindung 34 gegen Relativverdrehungen Schließlich können der Verbindungszapfen 29 und die Zapfenaufnahme 30 selbstverständlich auch ineinander geschraubt sein. Um dabei zu verhindern, daß sich die Gewindeverbindung 35 bei Linkslauf der Bohrspindel 2 lockert, ist der Verbindungszapfen 29 mit stirnseitig offenen Radialnuten 36 versehen, in die der Werkstoff 37 aus der Wand der Zapfenaufnahme 30 wiederum durch Werkstoffverformung eingesickt ist. Die Radialnuten 36 können selbstverständlich auch als stirnseitig offene Axialnuten 38 ausgebildet sein, was in Fig. 6d dargestellt ist.

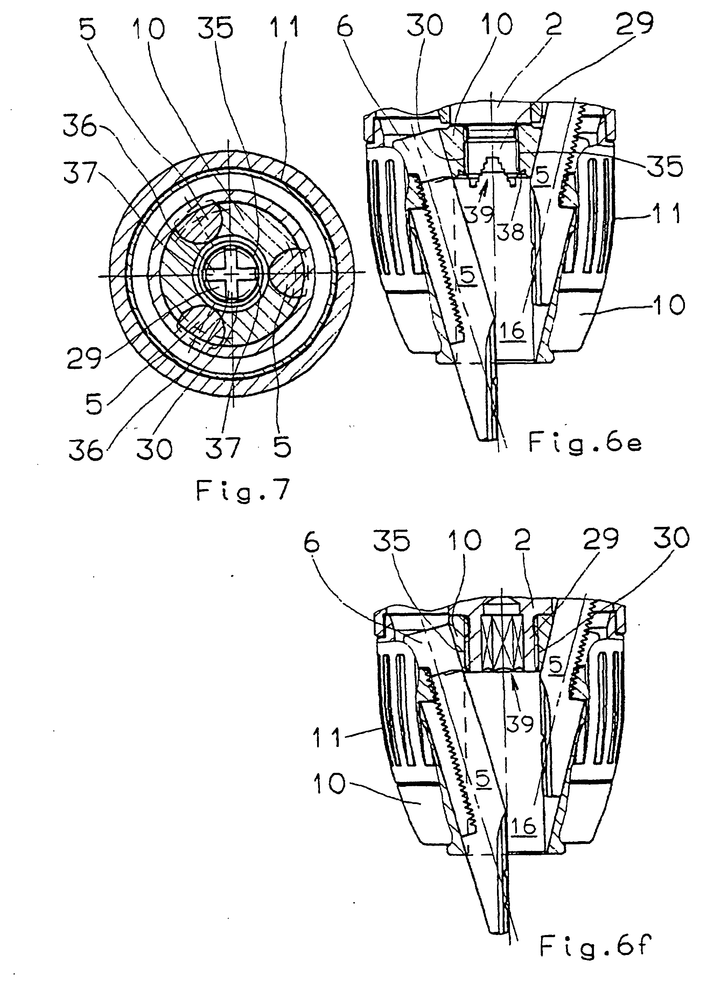

Der Verbindungszapfen 29 kann, wie in den Fig. 6b, 6c, 6d bis in die im Futterkörper für die Aufnahme des Werkzeugschaftes vorhandene Ausnehmung 16 vorstehen, in die die Spannbacken 4 hineinragen. Das Ende des in der Ausnehmung 16 zwischen den Spannbacken 4 gehaltenen Werkzeugschafts kann so unmittelbar an der Stirn des Verbindungszapfens 29 zur Anlage kommen. Dabei kann der Verbindungszapfen 29 stirnseitig Einrichtungen 39 zur Führung und/oder Drehmitnahme des Werkzeugschaftendes besitzen, wie dies beispielsweise die Fig. 6e, 6f zeigen. Im übrigen besteht die Möglichkeit, die Bohrspindel und den Futterkörper axial gegeneinander unverschieblich, wie beispielsweise in Fig. 6b, oder gegeneinander begrenzt verschiebbar anzuordnen, wie dies Fig. 6c zeigt.

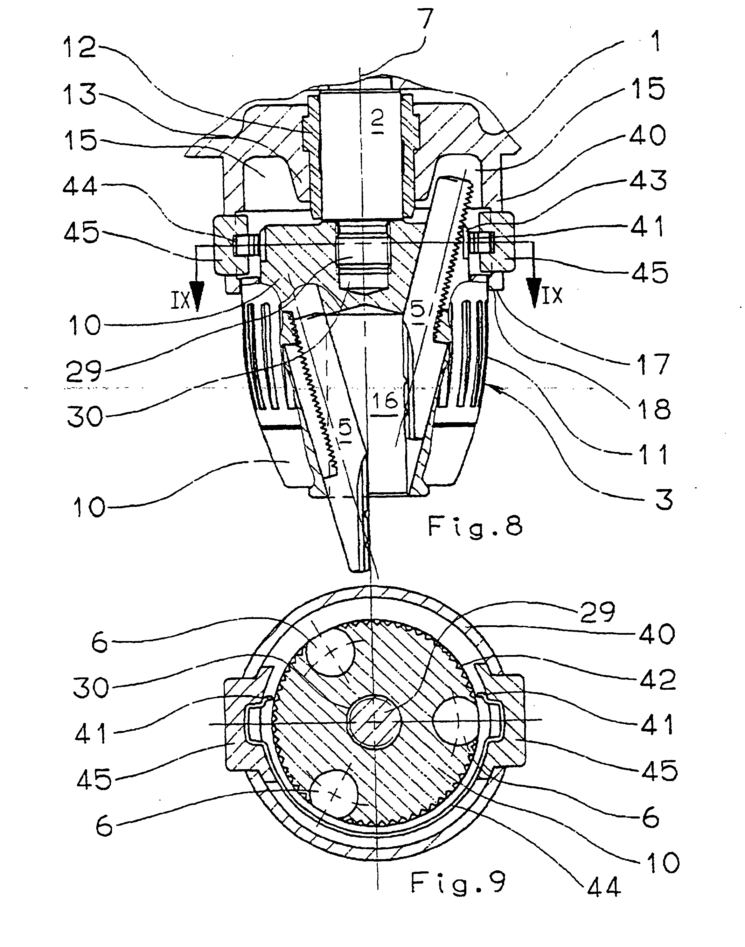

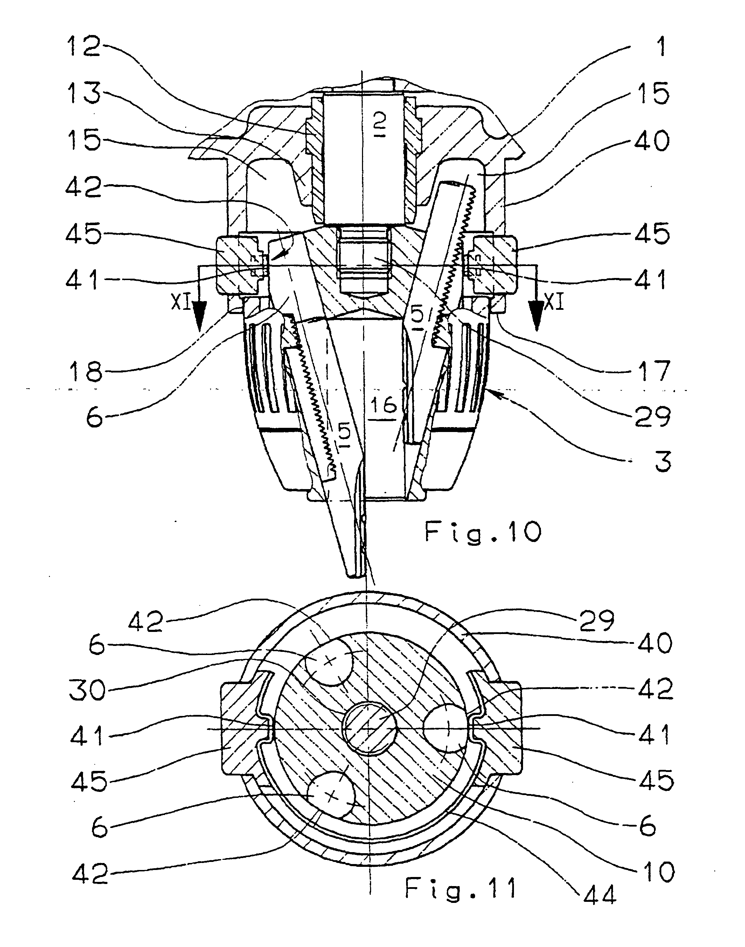

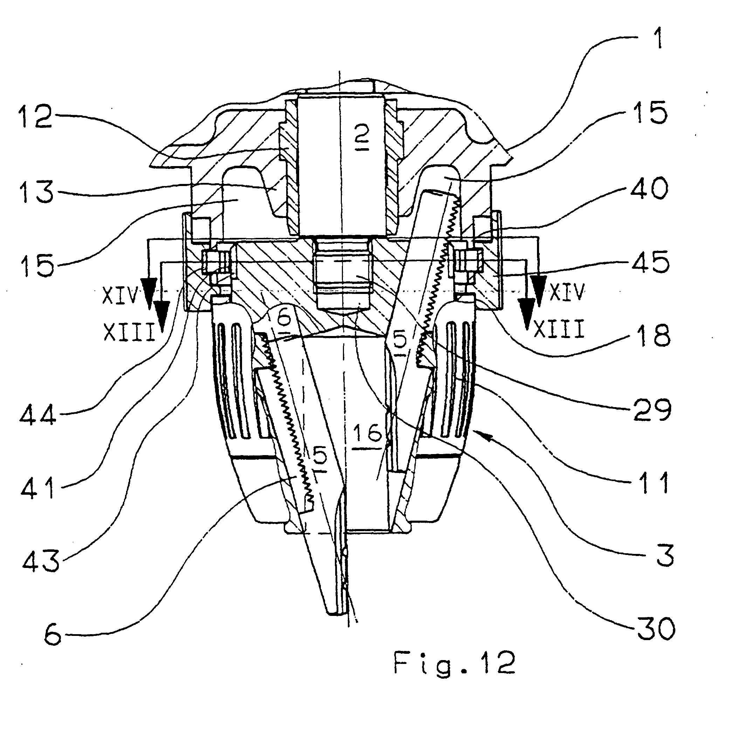

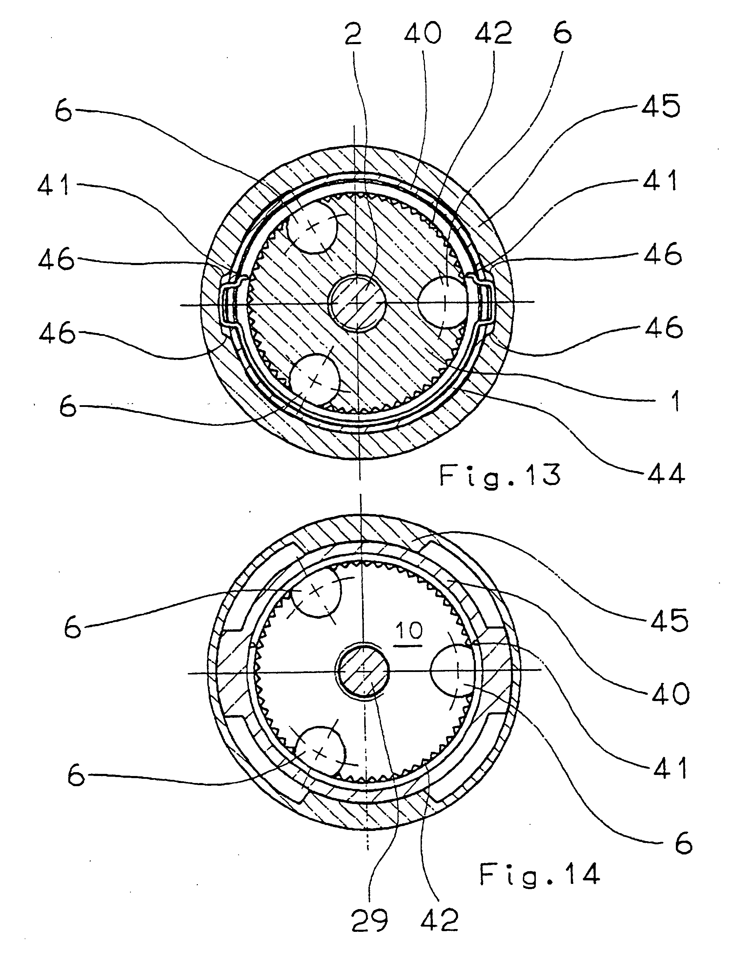

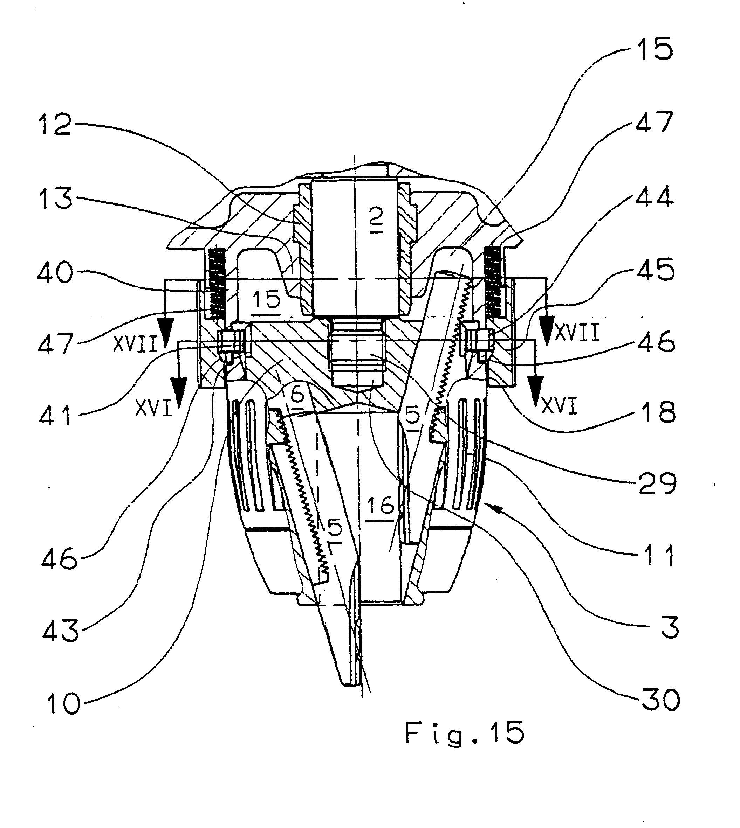

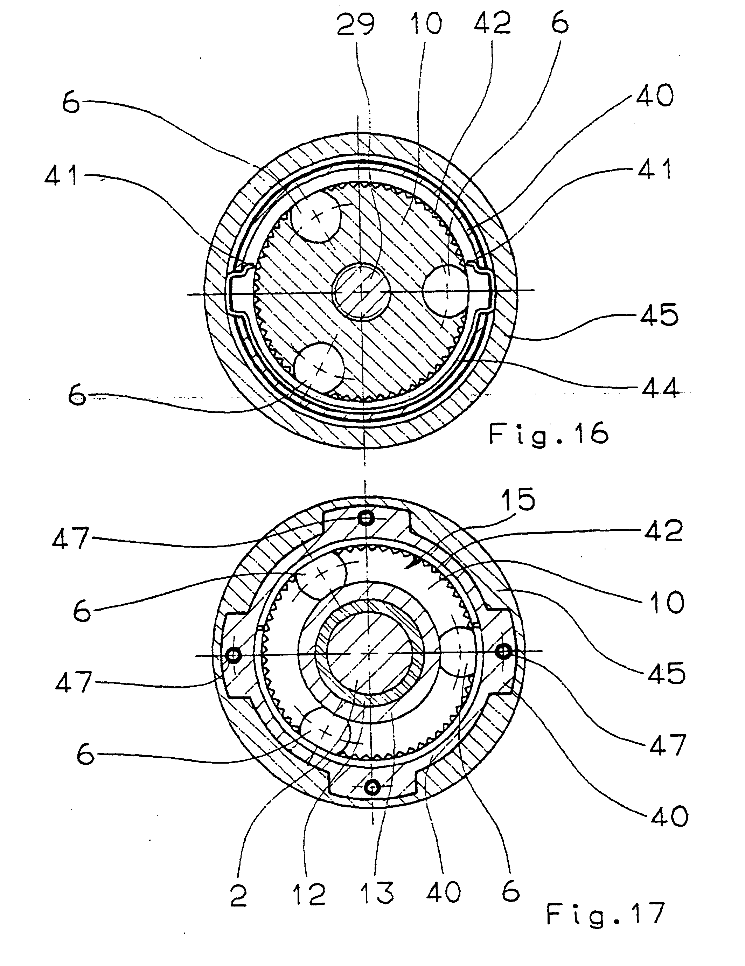

Das Spindelgehäuse 1 kann den Ringraum 15 außen mit einem Kragen 40 übergreifen, wobei dessen axiale Länge, wie insbesondere etwa in Fig. 23, nach denjeweiligen Erfordernissen größer oder kleiner gewählt werden kann. An diesem Kragen 40 können etwa radial nach innen gegen die Kraft von Rückstellfedern 44, 47 verstellbare Sperrglieder 41 angeordnet sein, die im einwärts verstellten Zustand in am Futterkörper vorgesehene Sperrausnehmungen 42 greifen und den Futterkörper 10 gegen Drehen sperren, wie dies die Fig. 8 bis 17 in verschiedenen Ausführungsformen zeigen. Die Sperrausnehmungen 42 können von den Zahnlücken eines am Futterkörper 10 ausgebildeten Zahnkranzes 43 oder, wie in Fig. 10, 11, von den die äußere Umfangsfläche des Futterkörpers 10 anschneidenden Führungsaufnahmen 6 für die Backenschäfte 5 gebildet sein. Die Sperrglieder 41 sind von den Enden einer sich in Umfangsrichtung des Kragens 40 erstreckenden, zur Erzeugung der Rückstellkraft vorgespannten Blattfeder 44 gebildet und durch am Kragen 40 verstellbar geführte Betätigungsglieder 45 in die Sperrstellung verstellbar. Diese Betätigungsglieder 45 sind im Ausführungsbeispiel nach den Fig. 8 bis 11 als an sich diametral gegenüber liegender Stelle angeordnete Taster ausgebildet, die an den Federenden 41 gehalten und radial verstellbar in entsprechenden Fenstern des Kragens 40 geführt sind. Nach den Ausführungsbeispielen entsprechend den Fig. 12 bis 17 ist dagegen nur ein einziges Betätigungsglied 45 für beide Sperrglieder 41 vorhanden, nämlich als am Kragen 40 verstellbarer Betätigungsring ausgebildet, der mit Steuerkurven 46 für die ihm anliegenden Sperrglieder 41 ausgestattet ist. Im Ausführungsbeispiel nach den Fig. 12 bis 14 ist der Betätigungsring 45 am Kragen 40 in Umfangsrichtung begrenzt verdrehbar, wobei die Steuerkurven 46 entsprechend in Umfangsrichtung verlaufen. Im Ausführungsbeispiel nach den Fig. 15 bis 17 dagegen ist der Betätigungsring 45 in Axialrichtung verschiebbar, wobei die Steuerkurven 46 entsprechend in Axialrichtung verlaufen.

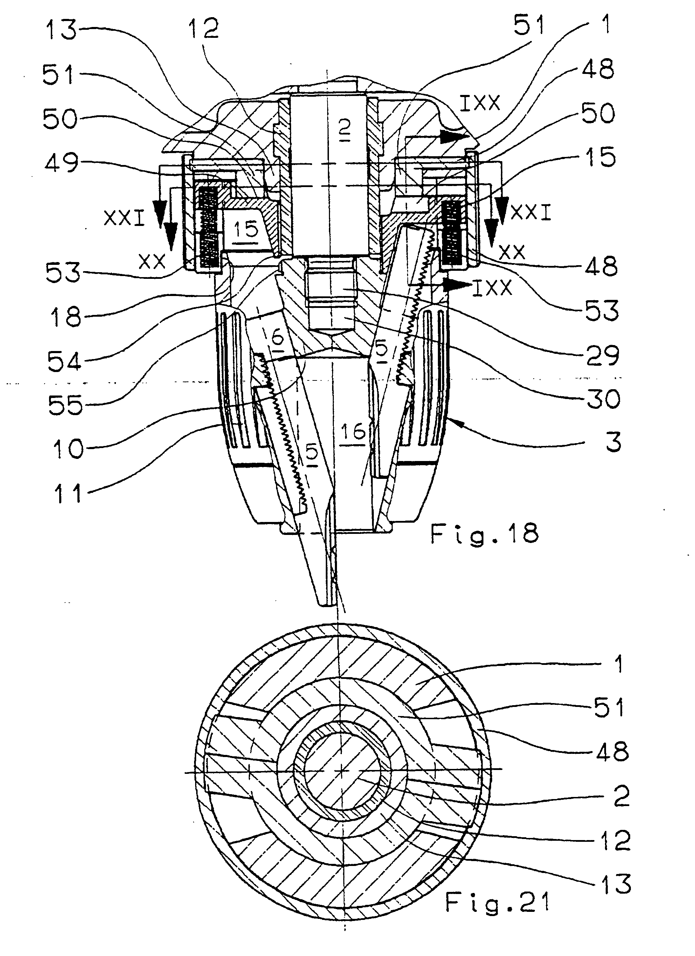

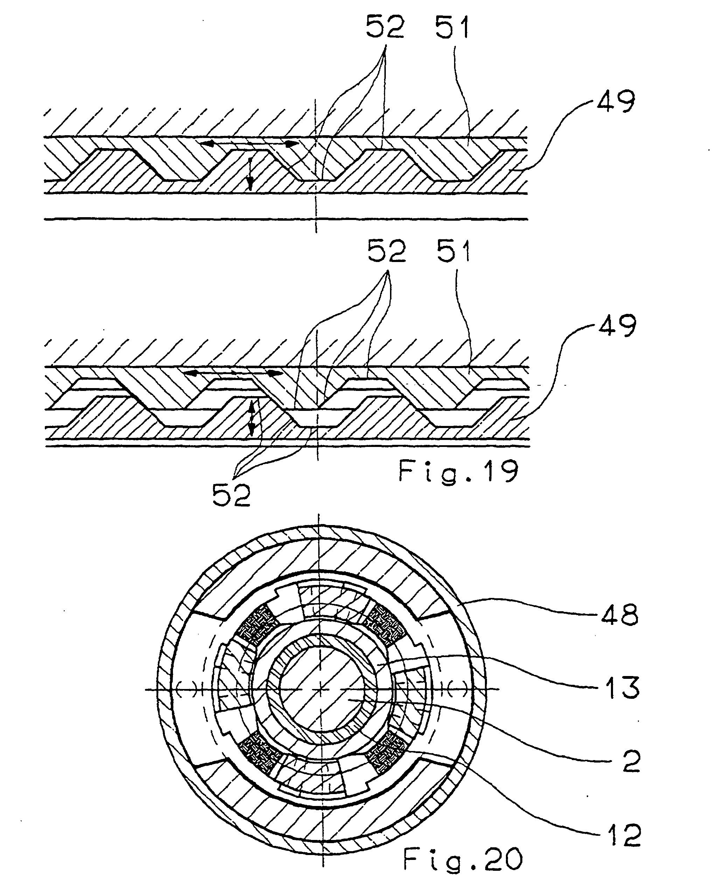

Die Fig. 18 bis 21 zeigen eine Ausführungsform, bei der der Ringraum 15 außen mit einer am Spindelgehäuse 1 drehbar geführten Betätigungshülse 48 abgeschlossen ist, die mit einem im Spindelgehäuse 1 axial verstellbaren, undrehbaren Sperring 49 gekuppelt ist, welcher in seiner gegen den Futterkörper 10 vorgeschobenen Sperrstellung, in Fig. 18 rechts dargestellt, am Futterkörper 10 zum Eingriff kommt und ihn gegen Verdrehen sperrt. Die Betätigungshülse 48 ist und axial unverschiebbar am Spindelgehäuse 1 geführt. Die Kupplung 50 zwischen der Betätigungshülse 48 und dem Sperring 49 erfolgt über eine aus Fig. 19 ersichtliche Steuerscheibe 51 mit einer Steuerkurve 52, in der der Sperring 49 unter der Kraft von Rückstellfedern 53 axial an der Steuerscheibe 51 anliegt. Die Fig. 19 zeigt die gegenseitige Stellung von Sperring 49 und Steuerscheibe 51 im Kupplungsbereich bei in der Sperrstellung stehendem Sperring in der unteren Figurenhälfte, in der oberen Figurenhälfte dagegen im entsperrten Zustand. Der Ringraum 15 ist im Sperring 49 ausgebildet, der am radial innen liegenden Rand des Ringraums 15 einen Zahnring 54 trägt, der an einem am Futterkörper 10 ausgebildeten, zugeordneten Zahnring 55 zum Sperreingriff kommt, wenn der Sperring 49 in die gegen das Bohrfutter 3 axial vorgestellte Sperrstellung verschoben ist.

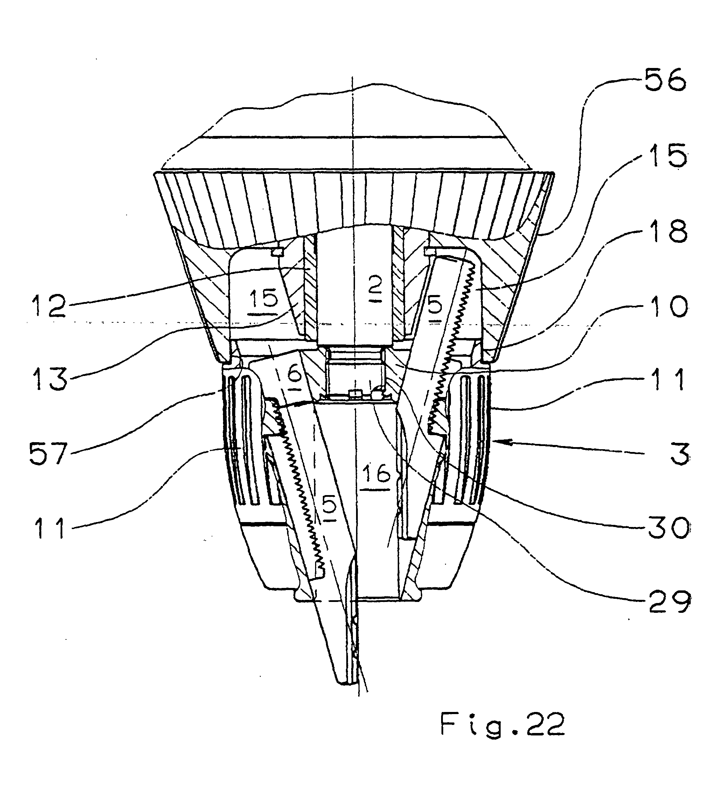

Die Fig. 22 schließlich zeigt ein Ausführungsbeispiel, bei dem im Spindelgehäuse 1 eine das Drehmoment der Bohrspindel begrenzende Drehmomentkupplung vorgesehen ist, die allerdings in der Figur der Einfachheit und besseren Übersicht wegen nicht dargestellt ist. Eine solche Drehmomentkupplung ist mittels eines außen am Spindelgehäuse 1 verdrehbar geführten Stellringes 56 bezüglich des maximal übertragbaren Drehmomentes einstellbar. Im Ausführungsbeispiel dient dieser Stellring 56 zugleich zum Abschließen des Ringraums 15 nach außen, wozu der Stellring 56 den Ringraum 15 vom Spindelgehäuse 1 aus bis zum Bohrfutter 3 axial übergreift und den Spannring 11 des Bohrfutters in einem Ringfalz 57 überlappt.

## Patentansprüche

1. Bohrfutter (3) mit einem Futterkörper (10), mit zwischen sich ein Bohrwerkzeug aufnehmenden Spannbacken (4), die Backenschäfte (5) aufweisen, welche zur Anpassung der Spannbackenstellung an den Einspanndurchmesser des Bohrwerkzeugs und zum Spannen und Lösen des Bohrfutters (3) in Führungsaufnahmen (6) des Futterkörpers (10) verstellbar sind, und mit einem mit dem Futterkörper (10) koaxialen und zum Verstellen der Spannbacken (4) relativ zum Futterkörper (10) verdrehbaren Spannring (11), sowie mit einer Zapfenaufnahme (30) zur koaxialen und drehschlüssigen Verbindung des Futterkörpers (10) mit einem Verbindungszapfen (29) der in einem Spindelgehäuse, insbesondere einer Handbohrmaschine drehbar und antreibbar gelagerten Bohrspindel (2), **dadurch gekennzeichnet, daß** in der dem geöffneten Bohrfutter entsprechenden Grenzstellung der Spannbacken (4) die Backenschäfte (5) zur Überlappung sich seitlich neben der Zapfenaufnahme (30) mit dem darin einsetzbaren Verbindungszapfen (29) der Bohrspindel (2) sowie seitlich neben dem an den Verbindungszapfen (29) angrenzenden Teil der Bohrspindel (2) befinden.

2. Bohrfutter nach Anspruch 1, **dadurch gekennzeichnet, daß** die Zapfenaufnahme (30) zur Lagerung der Bohrspindel (2) im Futterkörper (10) axial sehr nahe, nämlich unmittelbar benachbart, bei der den vom Bohrfutter (3) gehaltenen Werkzeugschaft aufnehmenden Ausnehmung (16) angeordnet ist.

3. Bohrfutter nach Anspruch 1 oder 2, **dadurch gekennzeichnet, daß** der Verbindungszapfen (29) und die Zapfenaufnahme (30) ineinander geschraubt sind.

4. Bohrfutter nach einem der Ansprüch 1 bis 3, **dadurch gekennzeichnet, daß** die Zapfenaufnahme (30) in axialer Richtung auf Höhe des Eingriffs des Spannrings (11) in die Verzahnung (8) der Backenschäfte (5) im Futterkörper (10) angeordnet ist.

5. Bohrfutter nach Anspruch 4, **dadurch gekennzeichnet, daß** der Eingriff des Spannrings (11) in die Verzahnung (8) der Backenschäfte (5) axial hinter der Zapfenaufnahme auf der dem Spindelgehäuse (1) zugewandten Seite des Futterkörpers (10) liegt.

6. Bohrfutter nach Anspruch 4 oder 5, **dadurch gekennzeichnet, daß** der Eingriff des Spannrings (11) in die Verzahnung (8) der Backenschäfte (5) axial hinter dem dem Spindelgehäuse (1) zugewandten Ende des Futterkörpers (10) liegt.

7. Bohrfutter nach einem der Ansprüche 1 bis 6, **dadurch gekennzeichnet, daß** die Backenschäfte (5) beim Verstellen der Spannbacken (4) zu größeren Einspanndurchmessern rückwärts aus den Führungsaufnahmen (6) austreten und axial über das dem Spindelgehäuse (1) zugewandte Ende des Futterkörpers (10) überstehen.

8. Bohrfutter nach einem der Ansprüche 1 bis 7, **dadurch gekennzeichnet, daß** die Backenschäfte (5) beim Verstellen der Spannbacken (4) zu größeren Einspanndurchmessern am Ende des Gewindeeingriffs des Spannrings (11) in die Verzahnung (8) der Backenschäfte (5) aus dem Futterkörper (10) austreten.

9. Bohrfutter nach Anspruch 8, **dadurch gekennzeichnet, daß** die aus dem Futterkörper (10) austretenden Backenschäfte (5) in einem zwischen dem Futterkörper (10) und dem Spindelgehäuse (1) ausgebildeten Ringraum (15) ragen, der nach außen hin abgeschlossen ist.

10. Bohrfutter nach einem der Ansprüche 1 bis 9, **dadurch gekennzeichnet, daß** der Spannring (11) einen Kragen aufweist, an dessen Innenumfangsfläche eine Ringnut ausgebildet ist, in die zur axialen Sicherung des Spannrings (11) ein am Futterkörper (10) ausgebildeter Ringbund eingreift.

11. Bohrfutter nach einem der Ansprüche 9 oder 10, **dadurch gekennzeichnet, daß** das Bohrfutter (3) auf der Bohrspindel (2) axial so dicht am Spindelgehäuse (1) angeordnet ist, daß die austretenden Enden der Backenschäfte (5) in dem im Spindelgehäuse (1) ausgebildeten, axial zum Bohrfutter (3) hin offenen Ringraum (15) vorstehen, in dem die Backenschäfte (5) bei sich drehendem Bohrfutter (3) umlaufen.

12. Bohrfutter nach Anspruch 11, **dadurch gekennzeichnet, daß** der Gehäuserand (17) des Spindelgehäuses (1) mit dem Bohrfutter (3) eine axiale Überlappung (18) bildet.

13. Bohrfutter nach Anspruch 12, **dadurch gekennzeichnet, daß** die Überlappung (18) zwischen dem Gehäuserand (17) und dem Spannring (11) des Bohrfutters (3) ausgebildet ist.

14. Bohrfutter nach einem der Ansprüche 1 bis 13, **dadurch gekennzeichnet, daß** der Verbindungszapfen (29) und die Zapfenaufnahme (30) einen unrunden, insbesondere mehrkantigen Querschnitt besitzen und durch eine in Umfangsrichtung verlaufende Nut- und Federverbindung axial aneinander gesichert sind.

15. Bohrfutter nach Anspruch 14, **dadurch gekennzeichnet, daß** anstelle der Nut- und Federverbindung der Verbindungszapfen (29) in einer Ringnut einen am Futterkörper (10) zum Anschlag kommenden Sicherungsring (33) trägt.

16. Bohrfutter nach Anspruch 14, **dadurch gekennzeichnet, daß** anstelle der Nut- und Federverbindung in der Wand der Zapfenaufnahme (30) eine Ringnut (31) ausgebildet ist, in die Werkstoff (32) aus dem Verbindungszapfen (29) durch Werkstoffverformung eingesickt ist.

17. Bohrfutter nach einem der Ansprüche 1 bis 16, **dadurch gekennzeichnet, daß** der Verbindungszapfen (29) und die Zapfenaufnahme (30) durch eine axial verlaufende Nut- und Federverbindung (34) gegen Relativverdrehungen und mit einem am Futterkörper (10) zum Anschlag kommenden, in einer Ringnut des Verbindungszapfens (29) sitzenden Anschlagring (33) gegen axiale Relativverstellungen gesichert sind.

18. Bohrfutter nach einem der Ansprüche 1 bis 17, **dadurch gekennzeichnet, daß** der Verbindungszapfen (29) bis in eine im Futterkörper (10) für die Aufnahme des Werkzeugschaftes vorhandene Ausnehmung (16) vorsteht, in die die Spannbacken (4) hineinragen.

19. Bohrfutter nach Anspruch 18, **dadurch gekennzeichnet, daß** der Verbindungszapfen (29) axial begrenzt verschiebbar in der Zapfenaufnahme (30) gehalten ist.

20. Bohrfutter nach Anspruch 18, **dadurch gekennzeichnet, daß** der Verbindungszapfen (29) an seinem in die Ausnehmung (16) für den Werkzeugschaft vorstehenden Ende Einrichtungen (39) zur Führung und/oder Drehmitnahme des Werkzeugschaftendes aufweist.

## Claims

1. A drilling chuck (3) comprising a chuck body (10), clamping jaws (4) which receive a drilling tool between them and which have jaw shanks (5) which are displaceable in guide receiving means (6) of the chuck body (10) for adaptation of the clamping jaw position to the clamping diameter of the drilling tool and for tightening and releasing the drilling chuck (3), and a clamping ring (11) which is coaxial with the chuck body (10) and which is rotatable for displacement of the clamping jaws (4) relative to the chuck body (10), and a pin receiving means (30) for coaxially and non-rotatably connecting the chuck body (10) to a connecting pin (29) of the drilling spindle (2) which is mounted rotatably and driveably in a spindle housing, in particular a hand drilling machine, **characterised in that** in the limit position of the clamping jaws (4) corresponding to the opened drilling chuck the jaw shanks (5) for overlapping are disposed laterally beside the pin receiving means (30) with the connecting pin (29) of the drilling spindle (2) which can be inserted therein and laterally beside the part of the drilling spindle (2) adjoining the connecting pin (29).

2. A drilling chuck according to claim 1 **characterised in that** for mounting the drilling spindle (2) in the chuck body (10) the pin receiving means (30) is arranged axially very close, more specifically directly adjacent, to the opening (16) which receives the tool shank which is held by the drilling chuck (3).

3. A drilling chuck according to claim 1 or claim 2 **characterised in that** the connecting pin (29) and the pin receiving means (30) are screwed one into the other.

4. A drilling chuck according to one of claims 1 to 3 **characterised in that** the pin receiving means (30) is arranged in the axial direction at the level of the engagement of the clamping ring (11) into the tooth arrangement (8) of the jaw shanks (5) in the chuck body (10).

5. A drilling chuck according to claim 4 **characterised in that** the engagement of the clamping ring (11) into the tooth arrangement (8) of the jaw shanks (5) is axially behind the pin receiving means on the side of the chuck body (10) that is towards the spindle housing (1).

6. A drilling chuck according to claim 4 or claim 5 **characterised in that** the engagement of the clamping ring (11) into the tooth arrangement (8) of the jaw shanks (5) is axially behind the end of the chuck body (10) that is towards the spindle housing (1).

7. A drilling chuck according to one of claims 1 to 6 **characterised in that** upon displacement of the clamping jaws (4) to afford larger clamping diameters the jaw shanks (5) issue rearwardly from the guide receiving means (6) and project axially beyond the end of the chuck body (10) that is towards the spindle housing (1).

8. A drilling chuck according to one of claims 1 to 7 **characterised in that** upon displacement of the clamping jaws (4) to afford larger clamping diameters at the end of the screwthread engagement of the clamping ring (11) into the tooth arrangement (8) of the jaw shanks (5) the jaw shanks (5) issue from the chuck body (10).

9. A drilling chuck according to claim 8 **characterised in that** the jaw shanks (5) which issue from the chuck body (10) project in an annular space (15) which is provided between the chuck body (10) and the spindle housing (1) and which is closed off outwardly.

10. A drilling chuck according to one of claims 1 to 9 **characterised in that** the clamping ring (11) has a collar, at the inside peripheral surface of which is provided an annular groove into which engages an annular flange provided on the chuck body (10) for axially securing the clamping ring (11).

11. A drilling chuck according to one of claims 9 and 10 **characterised in that** the drilling chuck (3) is arranged on the drilling spindle (2) so axially close to the spindle housing (1) that the issuing ends of the jaw shanks (5) project in the annular space (15) which is provided in the spindle housing (1) and which is open axially towards the drilling chuck (3) and in which the jaw shanks (5) rotate when the drilling chuck (3) is rotating.

12. A drilling chuck according to claim 11 **characterised in that** the housing edge (17) of the spindle housing (1) forms with the drilling chuck (3) an axial overlap (18).

13. A drilling chuck according to claim 12 **characterised in that** the overlap (18) is provided between the housing edge (17) and the clamping ring (11) of the drilling chuck (3).

14. A drilling chuck according to one of claims 1 to 13 **characterised in that** the connecting pin (29) and the pin receiving means (30) are of a non-round, in particular polygonal cross-section and are secured axially to each other by a groove-and-tongue connection extending in the peripheral direction.

15. A drilling chuck according to claim 14 **characterised in that** instead of the groove-and-tongue connection the connecting pin (29) carries in an annular groove a securing ring (33) which comes to bear against the chuck body (10).

16. A drilling chuck according to claim 14 **characterised in that** instead of the groove-and-tongue connection provided in the wall of the pin receiving means (30) is an annular groove (31) into which material (32) from the connecting pin (29) is swaged by material deformation.

17. A drilling chuck according to one of claims 1 to 16 **characterised in that** the connecting pin (29) and the pin receiving means (30) are secured to prevent relative rotation by an axially extending groove-and-tongue connection (34) and to prevent axial relative displacement by an abutment ring (33) which comes to bear against the chuck body (10) and which is fitted in an annular groove in the connecting pin (29).

18. A drilling chuck according to one of claims 1 to 17 **characterised in that** the connecting pin (29) projects into an opening (16) which is provided in the chuck body (10) for receiving the tool shank and into which the clamping jaws (4) project.

19. A drilling chuck according to claim 18 **characterised in that** the connecting pin (29) is held axially limitedly displaceably in the pin receiving means (30).

20. A drilling chuck according to claim 18 **characterised in that** at its end projecting into the opening (16) for the tool shank the connecting pin (29) has means (39) for guidance and/or rotary entrainment of the end of the tool shank.

## Revendications

1. Mandrin de perçage (3) comportant un corps de mandrin (10), des mors de serrage (4) qui reçoivent entre eux un outil de perçage, présentent des tiges de mors (5) qui, pour adapter la position des mors de serrage au diamètre de serrage de l'outil de perçage et pour serrer et desserrer le mandrin de serrage (3), peuvent être déplacées dans des logements de guidage (6) du corps de mandrin (10), une bague de serrage (4) qui est coaxiale avec le corps de mandrin (10) et peut tourner par rapport au corps de mandrin (10) aux fin de déplacer les mors de serrage (4), ainsi qu'un logement de nez de broche (30) pour lier coaxialement et de manière solidaire en rotation le corps de mandrin (10) à un nez de broche d'entraînement (29) monté avec possibilité de rotation et d'entraînement dans un carter de broche, notamment d'une perceuse portative, **caractérisé par le fait que** dans la position extrême des mors de serrage (4) correspondant au mandrin de perçage ouvert, les tiges de mors (5) à des fins de chevauchement, sont disposées sur le côté du logement de nez de broche (30) avec le nez de broche (29) de la broche de perçage (2) engagé dans celui-ci, ainsi que sur le côté de la portion de la broche de perçage (2) contiguë au nez de broche (29).

2. Mandrin de perçage selon la revendication 1, **caractérisé par le fait que** le logement de nez de broche (30) recevant la broche de perçage (2) dans le corps de mandrin (10) est très proche axialement, à savoir est disposé dans le voisinage immédiat de l'évidement (16), qui reçoit la queue d'outil tenue dans le mandrin de perçage (3).

3. Mandrin de perçage selon la revendication 1 ou 2, **caractérisé par le fait que** le nez de broche (29) et le logement de nez de broche (30) sont vissés l'un dans l'autre.

4. Mandrin de perçage selon une des revendications 1 à 3, **caractérisé par le fait que** le logement de nez de broche (30) dans la direction axiale, est disposé à la hauteur de l'engrènement de la bague de serrage (11) avec la denture (8) des tiges de mors (5) dans le corps de mandrin ( 10).

5. Mandrin de perçage selon la revendication 4, **caractérisé par le fait que** l'engrènement de la bague de serrage (11) avec la denture (8) des tiges de mors (5) est situé axialement derrière le logement de nez de broche, du côté du corps de mandrin (10) tourné vers le carter de broche (1).

6. Mandrin de perçage selon la revendication 4 ou 5, **caractérisé par le fait que** l'engrènement de la bague de serrage (11) avec la denture (8) des tiges de mors (5) est situé axialement derrière l'extrémité du corps de mandrin (10) tournée vers le carter de broche (1)

7. Mandrin de perçage selon une des revendications 1 à 6, **caractérisé par le fait que** les tiges de mors (5), lors du déplacement des mors (4) vers des diamètres de serrage plus grands, sortent des logements de guidage vers l'arrière et font saillie axialement au-delà de l'extrémité du corps de mandrin (10) tournée vers le carter de broche (1).

8. Mandrin de perçage selon une des revendications 1 à 7, **caractérisé par le fait que** les tiges de mors (5) lors du déplacement des mors (4) vers des diamètres de serrage plus grands, à la fin de l'engrènement du filetage de la bague de serrage (11) avec la denture (8) des mors de serrage (5) sortent du corps de mandrin (10).

9. Mandrin de perçage selon la revendication 8, **caractérisé par le fait que** les tiges de mors (5) qui sortent du corps de mandrin (10) font saillie dans un espace annulaire (15) qui est aménagé entre le corps de mandrin (10) et le carter de broché (1) et est fermé vers l'arrière.

10. Mandrin de perçage selon une des revendications 1 à 9, **caractérisé par le fait que** la bague de serrage (11) présente un collet dans la surface périphérique intérieure duquel est aménagée une gorge annulaire, dans laquelle un cordon annulaire prévu sur le corps de mandrin (10) s'engage à des fins de retenue de la bague de serrage (11) dans la direction axiale.

11. Mandrin de perçage selon une des revendications 9 ou 10, **caractérisé par le fait que** le mandrin de perçage (3) monté sur la broche de perçage (2) est monté si près du carter de broche (1) dans la direction axiale, que les extrémités sortantes des tiges de mors (5) font saillie dans l'espace annulaire (15) ouvert axialement en direction du mandrin de perçage (3), dans lequel les tiges de mandrin (5) tournent lorsque le mandrin de perçage (3) tourne.

12. Mandrin de perçage selon la revendication 11, **caractérisé par le fait que** le bord (17) du carter de broche ( 1) forme un recouvrement (18) axial avec le mandrin de perçage (3).

13. Mandrin de perçage selon la revendication 12, **caractérisé par le fait que** le recouvrement (18) est aménagé entre le bord de carter (17) et la bague de serrage (11) du mandrin de perçage (3).

14. Mandrin de perçage selon une des revendications 1 à 13, **caractérisé par le fait que** le nez de broche (29) et le logement de nez de broche (30) ont une section transversale non ronde, en particulier une section polygonale, et sont liés l'un à l'autre dans la direction axiale par une liaison à rainure et clavette qui s'étend dans la direction périphérique.

15. Mandrin de perçage selon la revendication 14, **caractérisé par le fait qu'**à la place de la liaison à rainure et clavette, le nez de broche (29) porte, dans une gorge annulaire, un anneau élastique (33) qui vient en butée sur le corps de mandrin (10).

16. Mandrin de perçage selon la revendication 14, **caractérisé par le fait qu'**à la place de la liaison à rainure et clavette, une gorge annulaire (31) est aménagée dans la paroi du logement de nez de broche (30), gorge dans laquelle de la matière (32) du nez de broche (29) est refoulée par façonnage.

17. Mandrin de perçage selon une des revendications 1 à 16, **caractérisé par le fait que** le nez de broche (29) et le logement de nez de broche (30) sont bloqués en rotation relative par une liaison à rainure et clavette (34) et en coulissement relatif dans la direction axiale par une bague de butée (33) qui est montée dans une gorge annulaire de la broche (29) et vient en butée sur le corps de mandrin (10).

18. Mandrin de perçage selon une des revendications 1 à 17, **caractérisé par le fait que** le nez de broche (29) fait saillie jusque dans un évidement (16) aménagé dans le corps de mandrin (10) pour recevoir la queue d'outil et dans lequel les mors de serrage (4) font saillie.

19. Mandrin de perçage selon la revendication 18, **caractérisé par le fait que** le nez de broche (29) est tenu dans le logement de nez de broche (30) avec possibilité de déplacement limité dans la direction axiale.

20. Mandrin de perçage selon la revendication 18, **caractérisé par le fait que** le nez de broche (29) à son extrémité qui fait saillie dans l'évidement (16) pour la queue d'outil comporte des dispositifs pour le guidage et/ou l'entraînement en rotation de l'extrémité de la queue d'outil.
